# EUROPEAN PATENT APPLICATION

(11) **EP 2 919 413 A2**
(43) Date of publication of application: **16.09.2015**
(21) Application number: 13787393.1
(22) Date of filing: 17.07.2013
(51) Int. Cl.: H04L 9/32

(54) **DATA SECURITY VERIFICATION METHOD AND DEVICE**

(30) Priority: 09.11.2012 CN 201210447029
(71) Applicant: ZTE Corporation, Shenzhen, Guangdong 518057 (CN)
(72) Inventor: LIU, Panpan, Shenzhen Guangdong 518057 (CN)
(74) Representative: Tischner, Oliver
(86) International application number: PCT/CN2013/079561
(87) International publication number: WO 2013/167043

(57) **Abstract**

A data security verification method is described, which includes: an encrypted security verification password sent from a terminal equipment is received; the security verification password is decrypted; the decrypted security verification password is verified according to a preset password; and a verification result is sent to the terminal equipment for the terminal equipment to operate according to the verification result, wherein the security verification password sent from the terminal equipment is decrypted by virtue of a public key and decrypted by virtue of a private key; the public key is an International Mobile Equipment Identity (IMEI) of a mobile terminal; and the private key is a password calculated and generated by combining the IMEI of the mobile terminal and super activation time of the terminal equipment and a mobile equipment. According to the disclosure, an equipment resource can be saved, and security and an anti-cracking probability can be enhanced.

## Description

### TECHNICAL FIELD

The disclosure relates to the field of data security protection, and in particular to a computer security verification method and device.

### BACKGROUND

With the development of times, computers have become an indispensable part in life. Computers are widely applied to numerical calculation, data processing, real-time control, computer-aided design, mode identification, recreational games and the like. Wherein, the data processing has become an application core of a commercial activity, computers are utilized to process, manage and operate data in various forms, and computers are utilized to operate, store and manage confidential data of a company. For example, a finance department performs bill processing, account processing and settlement by virtue of computers; and a personnel department establishes and manages personnel files by virtue of computers.

Data stored in a computer include important information such as personal secrets and business secrets. Convenient, safe and effective control over the data has become an important subject in the field of data security protection. Conventional protection modes of password setting, biological information identification or the like have the defects of high cracking or failure rate, high setting hardware cost or the like.

### SUMMARY

Embodiments of the disclosure disclose a data security verification method and system, so as to solve the problem of high cracking or failure rate or the technical problems of setting hardware cost and the like of protection modes of password setting, biological information identification or the like in the related art.

An embodiment of the disclosure provides a data security verification method, which includes:
receiving an encrypted security verification password sent from a terminal equipment;
decrypting the security verification password;
verifying the decrypted security verification password according to a preset password; and
sending a verification result to the terminal equipment for the terminal equipment to operate according to the verification result.

Preferably, the security verification password may be encrypted by virtue of a public key and decrypted by virtue of a private key.

Preferably, the public key may be an International Mobile Equipment Identity (IMEI) of the mobile terminal; and
the private key may be a password calculated and generated by combining the IMEI of the mobile terminal and super activation time of the terminal equipment and a mobile equipment.

Preferably, the data security verification method may further include: before the receiving the encrypted security verification password sent from the terminal equipment, receiving the preset password sent from the terminal equipment.

An embodiment of the disclosure further provides another data security verification method, which includes:
receiving a security verification password input by a user;
encrypting the security verification password;
sending the encrypted security verification password to a mobile terminal for the mobile terminal to verify;
receiving a verification result returned by the mobile terminal; and
performing an operation according to the verification result.

Preferably, the encrypting the security verification password may include: encrypting the security verification password by virtue of a public key.

Preferably, the public key may be an International Mobile Equipment Identity (IMEI) of the mobile terminal.

Preferably, the data security verification method may further include: before the encrypting the security verification password, verifying whether the security verification password is a super password or not; and
when the security verification password is the super password, prompting the user to input or modify a preset password, and sending the preset password to the mobile terminal.

An embodiment of the disclosure further provides a data security verification device, which includes:
a receiving module, configured to receive an encrypted security verification password sent from a terminal equipment;
a decryption module, configured to decrypt the security verification password, and to send the decrypted security verification password to a verification module;
the verification module, configured to verify the decrypted security verification password sent from the decryption module according to a preset password, and to send a verification result to a sending module; and
the sending module, configured to send the verification result sent from the verification module to the terminal equipment for the terminal equipment to operate according to the verification result.

Preferably, the decryption module may be configured to decrypt the security verification password by virtue of a private key; and the security verification password may be encrypted at the terminal equipment by virtue of a public key.

Preferably, the public key may be an International Mobile Equipment Identity (IMEI) of the mobile terminal; and the private key may be a password calculated and generated by combining the IMEI of the mobile terminal and super activation time of the terminal equipment and a mobile equipment.

Preferably, the receiving module may be configured, before receiving the encrypted security verification password sent from the terminal equipment, to receive the preset password sent from the terminal equipment.

Preferably, the data security verification device may further include:
an input module, configured to input a super password, and to set or modify the preset password; and
a display module, configured, when the verification module verifies the super password to be correct, to prompt a user to set or modify the preset password through the input module.

An embodiment of the disclosure further provides another data security verification device, which includes:
a receiving module, configured to receive a security verification password input by a user, and to receive a verification result of a mobile terminal, the device performing an operation according to the verification result;
an encryption module, configured to encrypt the security verification password; and
a sending module, configured to send the encrypted security verification password to the mobile terminal for the mobile terminal to verify.

Preferably, the encryption module may be configured to encrypt the security verification password by virtue of a public key.

Preferably, the public key may be an International Mobile Equipment Identity (IMEI) of the mobile terminal.

Preferably, the data security verification device may further include:
a verification module, configured, before verifying the security verification password, to verify whether the security verification password is a super password or not;
a display module, configured, when the security verification password is the super password, to prompt the user to input or modify a preset password; and
the sending module may be configured to send the preset password to the mobile terminal.

According to the embodiment of the disclosure, a smart phone is taken as a device bundled with a computer terminal of a user for security verification, so that convenience and easiness in carrying are ensured, and addition of equipment resources is avoided. The private key is formed by a unique hardware identity of the phone and activation time of a security bundling verification function, so that the uniqueness of the private key is ensured, and security is enhanced. With the use of the RSA algorithm, the irreversibility of an encryption algorithm is ensured, and a security verification mechanism in need of simultaneous connection of the computer terminal and a phone terminal is required to enhance an anti-cracking probability. The user can perform personalized customization on the computer terminal, for example: whether to adopt a personalized function such as a double-security encryption mechanism including the security bundling verification function of the phone and own security check of the computer terminal as well as a personalized interface style such as a customized background picture, so that a system function is enhanced.

### BRIEF DESCRIPTION OF THE DRAWINGS

The inventive concept of the embodiment of the disclosure will be described and introduced below with reference to the drawings in detail. In the drawings:
Fig. 1 is a flowchart of a data security verification method provided by embodiment 1 of the disclosure;
Fig. 2 is a flowchart of a data security verification method provided by embodiment 2 of the disclosure;
Fig. 3 is a structure diagram of a data security verification device provided by embodiment 3 of the disclosure; and
Fig. 4 is a structure diagram of another data security verification device provided by embodiment 4 of the disclosure.

### DETAILED DESCRIPTION

The preferred embodiments of embodiments of the disclosure will be described below with reference to the drawings, and the preferred embodiments described in this part are only adopted to describe and explain the embodiments of the disclosure and not intended to limit the embodiments of the disclosure.

### Embodiment 1

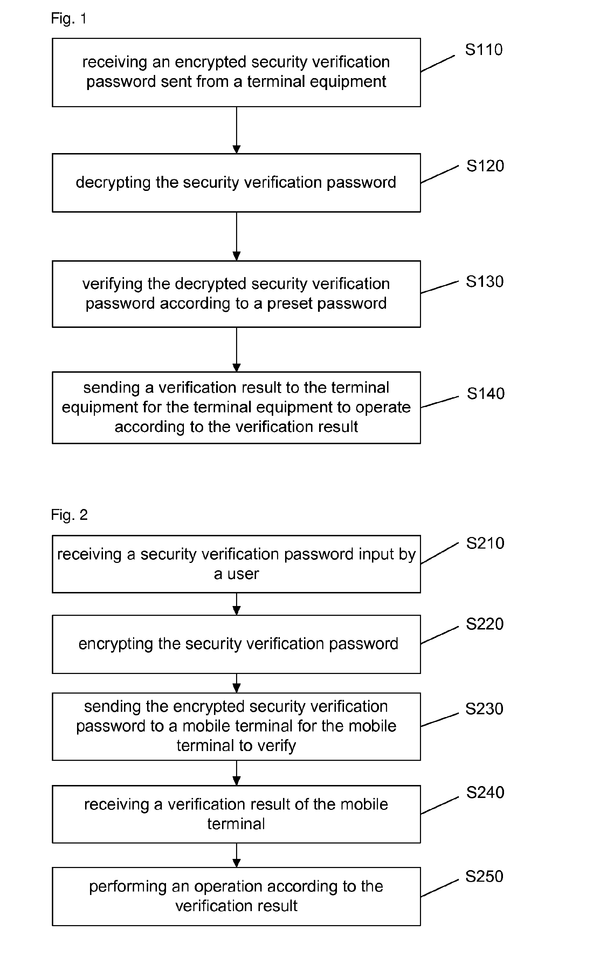

Fig. 1 is a flowchart of a data security verification method provided by embodiment 1 of the disclosure. The method may be implemented by virtue of software, is configured for security bundling verification between a mobile terminal and a terminal equipment, and runs, for example, through a mobile phone. As shown in Fig. 1, the method includes:
Step 110: receiving an encrypted security verification password sent from a terminal equipment.

Wherein, the terminal equipment encrypts the security verification password input by a user by virtue of an International Mobile Equipment Identity (IMEI) of a mobile terminal, thereby ensuring security verification uniqueness.

Step 120: decrypting the security verification password.

Wherein, the mobile terminal decrypts the encrypted security verification password by virtue of a private key.

The private key is a password calculated and generated by combining the IMEI of the mobile terminal and super activation time of the terminal equipment and a mobile equipment, for example, but not limited to, a 2048-bit password generated by using an RSA algorithm.

Step 130: verifying the decrypted security verification password according to a preset password.

Wherein, the preset password may be set or modified at the terminal equipment after the user inputs a correct super password; and before sending the security verification password, the terminal equipment encrypts and then sends the set or modified preset password to the mobile terminal. Correspondingly, the mobile terminal decrypts and stores the encrypted preset password sent from the terminal equipment.

The preset password may be encrypted by adopting, for example, the IMEI of the mobile terminal as a public key and decrypted by adopting the private key calculated and generated by combining the IMEI of the mobile terminal and the super activation time of the terminal equipment and the mobile equipment through the RSA algorithm as the private key. Or, the preset password may also be processed as follows: before receiving the security verification password sent from the terminal equipment, the mobile terminal receives and verifies a super password input by the user, and when the super password input by the user is correct, the user is prompted to input or modify the preset password. The super password is input by the user when the method runs for the first time.

Preferably, the super password is converted from the IMEI of the mobile terminal by virtue of an algorithm, for example, a symmetric key encryption algorithm.

Step 140: sending a verification result to the terminal equipment for the terminal equipment to operate according to the verification result.

The method in the embodiment can be implemented based on, but not limited to an Android system in form of a management program (such as a security bundling verification management module), can be published on an Android-system-based mobile terminal in form of a system integrated application, and cannot be copied by another mobile phone for use through a software export application. Data are sent between the terminal equipment and the mobile terminal through an Android Debug Bridge (ADB) port pipeline technology.

### Embodiment 2

Fig. 2 is a flowchart of another data security verification method provided by embodiment 2 of the disclosure. The method may be implemented by virtue of software, is configured for security bundling verification between a mobile terminal and a terminal equipment, and runs, for example, through a computer to realize security verification for access to an operating system of the computer. As shown in Fig. 2, the method includes:
Step 210: receiving a security verification password input by a user.

Before the step, a screen locking mechanism can be called for screen locking, and the user can be prompted to input a correct security verification password. Wherein, the screen locking mechanism may be implemented by virtue of a Send Message interface of an Application Programming Interface (API) of a windows operating system of terminal equipment, so that a system message mechanism is prevented from being intercepted.

Step 220: encrypting the security verification password.

A terminal equipment encrypts the security verification password by virtue of an IMEI of a mobile terminal, thereby ensuring security verification uniqueness.

Step 230: sending the encrypted security verification password to the mobile terminal for the mobile terminal to verify.

If there is no mobile terminal connected to the terminal equipment or the connected mobile terminal is not the mobile terminal bundled with the terminal equipment, the screen cannot be unlocked for access to the operating system of the terminal equipment.

Step 240: receiving a verification result of the mobile terminal.

Step 250: performing an operation according to the verification result.

Specifically, if the verification result indicates that the encrypted security verification password passes verification, the screen is unlocked for access to the operating system of the terminal equipment; otherwise, the screen cannot be unlocked for access to the operating system of the terminal equipment.

Before the security verification password is encrypted, the security verification password is verified whether to be a super password, and when the security verification password is the super password, the user is prompted to input or modify a preset password, the preset password is encrypted and then sent to the mobile terminal, and the mobile terminal decrypts and stores the preset password. The super password is input by the user when the method runs for the first time.

Preferably, the super password is converted from the IMEI of the mobile terminal by virtue of an algorithm, for example, a symmetric key encryption algorithm.

The method in the embodiment can be specifically implemented in a manner of forming a copy through the mobile terminal based on, but not limited to, an Android system in form of an execution program (such as a security bundling client), sending the copy to a temporary user directory of the terminal equipment through an ADB pipeline technology and calling the execution program through the ADB pipeline technology. The execution program installs a security bundling function to the computer, controls access to a system of the computer after security verification, and reserves key data such as a public key in a system registry. The execution program automatically runs in an underlying process, is officially enabled after the system is restarted the next time, and requires the user to input the security verification password and connect a mobile phone terminal. The user can perform personalized customization on the computer terminal through the execution program, for example: whether to adopt a personalized function such as a double-security encryption mechanism including a security bundling verification function of a mobile phone and own security check of the computer terminal as well as a personalized interface style such as a customized background picture.

### Embodiment 3

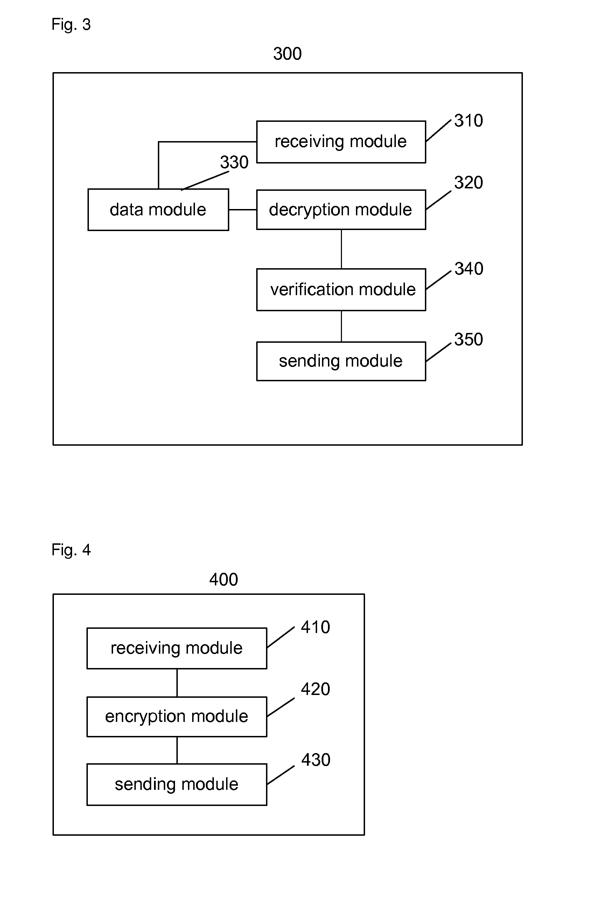

Fig. 3 is a structure diagram of a data security verification device provided by embodiment 3 of the disclosure. The device is a mobile terminal, for example, a mobile phone, and is configured for security bundling verification with a terminal equipment. As shown in Fig. 3, the data security verification device 300 includes:
a receiving module 310, configured to receive an encrypted security verification password sent from a terminal equipment;
a decryption module 320, configured to decrypt the security verification password, and to send the decrypted security verification password to a verification module 340;
the verification module 340, configured to verify the decrypted security verification password sent from the decryption module 320 according to a preset password, and to send a verification result to a sending module 350; and
the sending module 350, configured to send the verification result sent from the verification module 340 to the terminal equipment for the terminal equipment to operate according to the verification result.

Wherein, the terminal equipment encrypts the security verification password input by a user by virtue of an IMEI of a mobile terminal, thereby ensuring security verification uniqueness.

Correspondingly, the decryption module 320 of the mobile terminal decrypts the encrypted security verification password by virtue of a private key. The private key is a password calculated and generated by combining the IMEI of the mobile terminal and super activation time of the terminal equipment and a mobile equipment, for example, but not limited to, a 2048-bit password generated by using an RSA algorithm.

Preferably, the device 300 further includes: a data module 330, configured to perform format conversion on the encrypted security verification password sent from the receiving module 310, and to send the converted security verification password and the private key to the decryption module 320; correspondingly, the decryption module 320 is configured to decrypt the security verification password according to the security verification password and private key sent from the data module 330.

The preset password may be set or modified at the terminal equipment after the user inputs a correct super password, and after the set or modified preset password is encrypted, the terminal equipment sends the encrypted preset password to the mobile terminal before sending the security verification password. The mobile terminal decrypts and stores the encrypted preset password.

The preset password may be encrypted by adopting, for example, the IMEI of the mobile terminal as a public key and decrypted by adopting the private key calculated and generated by combining the IMEI of the mobile terminal and the super activation time of the terminal equipment and the mobile equipment through the RSA algorithm as the private key. Or, the preset password may also be processed as follows: before receiving the security verification password sent from the terminal equipment, the mobile terminal receives and verifies a super password input by the user, and when the super password input by the user is correct, the user is prompted to input or modify the preset password. The super password is input by the user when the device runs for the first time.

Preferably, the super password is converted from the IMEI of the mobile terminal by virtue of an algorithm, for example, a symmetric key encryption algorithm.

The mobile terminal can adopt, but not limited to, an Android system, and data are sent between the terminal equipment and the mobile terminal through an ADB port pipeline technology.

### Embodiment 4

Fig. 4 is a structure diagram of another data security verification device provided by embodiment 4 of the disclosure. The device is terminal equipment, for example, a computer, and is configured for security bundling verification with a mobile terminal for security verification for access to an operating system of the computer. As shown in Fig. 4, the data security verification device 400 includes:
a receiving module 410, configured to receive a security verification password input by a user, and to receive a verification result of a mobile terminal;
an encryption module 420, configured to encrypt the security verification password; and
a sending module 430, configured to send the encrypted security verification password to the mobile terminal for the mobile terminal to verify.

Wherein, before the security verification password input by the user is received, a screen locking function structure can be automatically called through an execution program to lock a screen and control access to a system of terminal equipment after security verification. A screen locking mechanism may be implemented by virtue of a Send Message interface of an API of a windows operating system of the terminal equipment, so that a system message mechanism is prevented from being intercepted. If there is no mobile terminal connected to the terminal equipment or the connected mobile terminal is not the mobile terminal bundled with the terminal equipment, the screen cannot be unlocked for access to the operating system of the terminal equipment. The device performs an operation according to the verification result received by the receiving module 410, the screen is unlocked for access to the operating system of the terminal equipment if the verification result indicates that the encrypted security verification password passes verification, otherwise the screen cannot be unlocked for access to the operating system of the terminal equipment.

The execution program (such as a security bundling client) of the terminal equipment forms a copy through the mobile terminal based on, but not limited to, an Android system, sends the copy to a temporary user directory of the terminal equipment through an ADB pipeline technology, and is called through the ADB pipeline technology. The execution program installs a security bundling function to the terminal equipment, and reserves key data such as a public key in a system registry. The execution program automatically runs in an underlying process, is officially enabled after the system is restarted the next time, and requires the user to input the security verification password and connect a mobile phone terminal. The user can perform personalized customization on the computer terminal through the execution program, for example: whether to adopt a personalized function such as a double-security encryption mechanism including a security bundling verification function of a mobile phone and own security check of a computer terminal as well as a personalized interface style such as a customized background picture.

The encryption module 420 encrypts the security verification password input by the user by virtue of an IMEI of the mobile terminal, thereby ensuring security verification uniqueness.

The above is only the preferred embodiments of the embodiments of the disclosure and not intended to limit the embodiments of the disclosure, and those skilled in the art can make various modifications and variations to the embodiments of the disclosure. Any modification, equivalent replacement, improvement and the like made within the spirit and principle of the embodiments of the disclosure shall fall within the scope of protection of the embodiments of the disclosure.

## Claims

1. A data security verification method, for a mobile terminal, comprising:
receiving an encrypted security verification password sent from a terminal equipment;
decrypting the security verification password;
verifying the decrypted security verification password according to a preset password; and
sending a verification result to the terminal equipment for the terminal equipment to operate according to the verification result.

2. The data security verification method according to claim 1, wherein the security verification password is encrypted by virtue of a public key and decrypted by virtue of a private key.

3. The data security verification method according to claim 2, wherein
the public key is an International Mobile Equipment Identity (IMEI) of the mobile terminal; and
the private key is a password calculated and generated by combining the IMEI of the mobile terminal and super activation time of the terminal equipment and a mobile equipment.

4. The data security verification method according to claim 1, further comprising:
before the receiving the encrypted security verification password sent from the terminal equipment, receiving the preset password sent from the terminal equipment.

5. A data security verification method, for terminal equipment, comprising:
receiving a security verification password input by a user;
encrypting the security verification password;
sending the encrypted security verification password to a mobile terminal for the mobile terminal to verify;
receiving a verification result returned by the mobile terminal; and
performing an operation according to the verification result.

6. The data security verification method according to claim 5, wherein the encrypting the security verification password comprises: encrypting the security verification password by virtue of a public key.

7. The data security verification method according to claim 6, wherein the public key is an International Mobile Equipment Identity (IMEI) of the mobile terminal.

8. The data security verification method according to claim 5, further comprising:
before the encrypting the security verification password, verifying whether the security verification password is a super password or not; and
when the security verification password is the super password, prompting the user to input or modify a preset password, and sending the preset password to the mobile terminal.

9. A data security verification device, for a mobile terminal, comprising:
a receiving module, configured to receive an encrypted security verification password sent from a terminal equipment;
a decryption module, configured to decrypt the security verification password, and to send the decrypted security verification password to a verification module;
the verification module, configured to verify the decrypted security verification password sent from the decryption module according to a preset password, and to send a verification result to a sending module; and
the sending module, configured to send the verification result sent from the verification module to the terminal equipment for the terminal equipment to operate according to the verification result.

10. The data security verification device according to claim 9, wherein the decryption module is configured to decrypt the security verification password by virtue of a private key; and the security verification password is encrypted at the terminal equipment by virtue of a public key.

11. The data security verification device according to claim 10, wherein the public key is an International Mobile Equipment Identity (IMEI) of the mobile terminal; and the private key is a password calculated and generated by combining the IMEI of the mobile terminal and super activation time of the terminal equipment and a mobile equipment.

12. The data security verification device according to claim 9, wherein the receiving module is configured, before receiving the encrypted security verification password sent from the terminal equipment, to receive the preset password sent from the terminal equipment.

13. The data security verification device according to claim 9, further comprising:
an input module, configured to input a super password, and to set or modify the preset password; and
a display module, configured, when the verification module verifies the super password to be correct, to prompt a user to set or modify the preset password through the input module.

14. A data security verification device, for terminal equipment, comprising:
a receiving module, configured to receive a security verification password input by a user, and to receive a verification result of a mobile terminal, the device performing an operation according to the verification result;
an encryption module, configured to encrypt the security verification password; and
a sending module, configured to send the encrypted security verification password to the mobile terminal for the mobile terminal to verify.

15. The data security verification device according to claim 14, wherein the encryption module is configured to encrypt the security verification password by virtue of a public key.

16. The data security verification device according to claim 15, wherein the public key is an International Mobile Equipment Identity (IMEI) of the mobile terminal.

17. The data security verification device according to claim 16, further comprising:
a verification module, configured, before verifying the security verification password, to verify whether the security verification password is a super password or not;
a display module, configured, when the security verification password is the super password, to prompt the user to input or modify a preset password; and
the sending module is configured to send the preset password to the mobile terminal.
